# EUROPEAN PATENT APPLICATION

(11) **EP 2 793 089 A1**
(43) Date of publication of application: **22.10.2014**
(21) Application number: 13002008.4
(22) Date of filing: 17.04.2013
(51) Int. Cl.: G05B 19/409, G05B 9/02, G05B 19/418

(54) **System and method for remote isolation support**

(71) Applicant: ABB Technology AG, 8050 Zürich (CH)
(72) Inventor: Stieger, Bernd, 68723 Plankstadt (DE); Aleksy, Markus, 67071 Ludwigshafen (DE); Rissanen, Mikko, 564596 Singapore (SE)
(74) Representative: Kock, Ina

(57) **Abstract**

Computer system, computer implemented method and computer program product for supporting isolation of technical devices in a technical facility. The computer system includes a display component (110) configured to visualize a floor plan (111) of the technical facility. An input component (120) of the system can receive at least one graphical selection (121) wherein the graphical selection (121) encloses a portion of the floor plan. The portion corresponds to a to-be-isolated part of the technical facility. A device identifier component (130) of the system can identify a plurality of technical devices (A1, D4, D5) in the to-be-isolated part. An interface component (140) of the system can send isolation signals (IS1, IS2, IS3) to isolation components of the identified technical devices (A1, D4, D5). The isolation signals are adapted to operate the isolation components.

## Description

The present invention generally relates to computer aided isolation of sections of a technical facility and, more particularly, relates to methods, computer program products and systems to support remote isolation.

Technical facilities, such as plants, usually continuously require the execution of maintenance tasks for technical equipment of the facilities. Maintenance personnel are typically being required to perform maintenance activities at the location of the technical equipment. However, for safety reasons sections of the technical facility need to be shut down to avoid any injuries of the maintenance personnel and to avoid damaging the technical equipment through maintenance activities. In other words, in order to prepare a certain plant section for service actions this plant section should be standing still and there should be no hazard arising from any source of voltage or electrical current which might be harmful to the personnel.

A commercially available solution for remote isolation of plants is the REMSAFE REMOTE ISOLATION SYSTEM provided by ICM GROUP PTY LTD, Australia. The REMSAFE solution allows to remotely isolating electrical equipment or groups of equipment in an automated manner by using predefined fixed sequences of isolation steps. For example, multiple conveyors can be isolated simultaneously in a few minutes for shutdowns. However, a user of the system (e.g., a plant operator who is responsible for a specific section of the plant) has to know which equipment (e.g., which conveyors) is subject to isolation for a specific service task. Operators may not have this knowledge and, moreover, may not know where a particular piece of equipment is located in the technical facility. Especially in cases where a service activity is to be performed in a specific section of the technical facility it may be difficult for the operator to identify all equipment which needs to be isolated to guarantee the safety of the personnel. Such service activities may even not be related to the technical equipment at all. For example, a section of the plant needs to be painted. In this case the operator may be a janitor who is only interested in shutting down this section of the plant to get the paint work done. However, the operator may have no idea about the technical equipment in this section and the technical implications of such a shutdown on the various technical devices.

Therefore, there is a need to improve systems for isolation of specific plant sections where an operator of the system lacks knowledge about the technical details and the location of plant equipment. Isolation, as used herein after, refers to any activity which is suitable to electrically or physically disconnect technical equipment in the technical facility from any power source. Within the meaning of isolation falls the transition to an energy state equal or close to zero. This may include ridding technical equipment of any sort of potential or stored energy, including but not limited to: dangerous voltage, spring pressure, hydraulic (liquid) pressure, pneumatic (air) pressure, suspended weight, chemical energy (flammable or otherwise reactive substances), and nuclear energy (radioactive or fissile substances). In other words, isolation of technical equipment implies the shutdown of this equipment. The shutdown can imply to remove any connection to hazardous energy sources, or to keep the equipment connected to energy sources that are required even in off-mode. There may also exist technical equipment which must not be isolated. For example, cooling devices in a nuclear power plant always need to be always available.

The above technical problem is solved by embodiments of the invention according to the independent claims. In one embodiment, a computer system supports isolation of technical devices in a technical facility. Such technical devices can be any type of electrically powered technical equipment in a plant, such as for example, robots, conveyors, pumps, etc.

The computer system includes a display component adapted to visualize a floor plan of the technical facility. The display component may include a display unit, such as a computer monitor, a touch screen or some similar visual output device. It may further include a graphics processor component for performing computations to generate image data for visualization on the visual output device. The floor plan can be any graphical representation of the ground view of the technical facility. The floor plan could also include any other presentation that enables the user to identify a particular location in the facility, such as a perspective view. It may include graphical representations (layout elements) for illustrating the location of walls, windows, doors, etc. of the technical facility. It may further include layout elements representing the technical devices (technical equipment) at their respective locations in the facility.

The computer system further includes an input component which is configured to receive at least one graphical selection from a user of the computer system (e.g., an operator). The graphical selection encloses a portion of the floor plan wherein the portion corresponds to a to-be-isolated part of the technical facility. The input component can include any type of conventional input device (e.g., mouse, keyboard, touch screen) enabling the computer user to input data into the computer system. In case of using a touch screen, the input component may be merged with the output component in that the same display is used for visualizing the floor plan and for receiving the graphical selection. The graphical selection can be of any geometric shape (square, rectangle, circle, etc.) or can be freehand drawing. For example, in case of using a touch screen device as user interface then operator may draw a freehand line by performing a respective gesture on the touch screen. Another gesture may be used to span a square or rectangle across the portion of the floor plan which corresponds to the to-be-isolated part of the technical facility. The output component can give visual feedback to the user about the graphical selection. For example, the freehand line or geometric shape defining the graphical selection of the user is shown to the user with a specific color or line type.

The computer system further has a device identifier component which can identify a plurality of technical devices in the to-be-isolated part. Once the system has received the graphical selection, the system can determine the location coordinates corresponding to the to-be-isolated part of the technical facility. For example, the identifier component may access a technical device database to retrieve such technical devices having location coordinates inside the to-be-isolated part. Alternatively, the identifier component can identify the technical devices by identifying the respective graphical device representations on the floor plan which are enclosed by the graphical selection and checking which physical technical devices are associated with the graphical device representations.

In one embodiment, in response to receiving the graphical selection, the display component may change a visualization property (e.g., color, line type, file type, animation mode, etc.) of the graphical device representations enclosed by the graphical selection. The enclosed graphical device representations which are representing technical devices in the to-be-isolated part of the technical facility can then be easily visually distinguished from other graphical device representations because of the changed visualization property.

The computer system further has an interface component which is configured to send isolation signals to isolation components of the identified technical devices. The isolation signals are adapted to operate the isolation components. An isolation component causes the respective technical device to assume an operation mode that removes potential safety hazards. In other words, for an identified device the system can generate a corresponding isolation signal which is suitable to initiate a shutdown of the technical device when being received by the respective isolation component. An isolation component can be an appropriate switch to switch off the respective device but it can also include further hard- and/or software to perform a more complex predefined sequence of steps for shutting down the respective technical device (cf. REMSAFE system). Isolation components can be located remotely from the respective technical device (e.g., in switchboards).

The computer system supports an operator, who may be unknowledgeable about the technical device details in the technical facility, to remotely isolate any technical device which is located in the to-be-isolated part of the technical facility by simply indicating a spatial graphical selection of the to-be-isolated part on the respective floor plan.

In one embodiment, the device identifier component can retrieve isolation dependency rules for the identified technical devices. Such isolation dependency rules may be stored in a rule database accessible by the computer system. For example, the dependency rules can be part of the previously mentioned technical device database. Isolation dependency rules store information about dependencies between at least two devices with respect to the isolation of such devices. For example, when two conveyors are connected in a manner that the first conveyor is feeding material to the second container, a corresponding isolation dependency rule for the two conveyers can include the information that the first conveyer has to be isolated (e.g., shut down) before the second conveyor. Otherwise the system would risk damaging the conveyors and/or the material as the material might pile up at the interface of the second conveyor (not being able to receive new material in case of being shut down before the first conveyor). Based on the isolation dependency rules the device identifier can detect a potential isolation conflict for at least one of the identified technical devices. For example, if the operator has made a graphical selection on the floor plan enclosing the area where the second conveyor is located but not enclosing the area where the first conveyor is located, a potential isolation conflict occurs. In the example, the isolation of the second conveyor may lead to a disadvantageous situation causing damages if the first conveyer would be isolated beforehand. The display component may then highlight the graphical device representation of the at least one identified technical device having such a potential isolation conflict. In other words, a corresponding visualization property of the technical device having a potential conflict in view of the operator's current graphical selection can be changed. For example, the respective graphical device representation (e.g., second conveyor) may be animated (e.g., blinking, zoom-in-zoom-out) or shown with a bright color to catch the operator's attention indicating that the current graphical selection may be inappropriate as an to-be-isolated part of the technical facility. In one embodiment, the computer system may suppress the sending of isolation signals to the isolation components of identified technical devices having a potential isolation conflict. This avoids disadvantageous isolation activities which may cause harm or damages.

In addition, the computer system may also highlight technical device representations outside the graphical selection in case at least one further technical device which is outside the selected to-be-isolated part has a potential isolation conflict with at least one identified technical device. In the previous example, the display component can also highlight the first conveyor which should be isolated before the currently identified second conveyor. Thus, the computer system supports the operator not only to recognize that there is a potential isolation conflict associated with the current graphical selection but also provides hints to a possible resolution of the conflict by indicating such technical devices causing the potential isolation conflict for the current graphical selection. The system may suggest an extended graphical selection enclosing also the at least one further graphical device representation of the at least one further technical device. The suggested extended graphical selection shows to the user which parts of the technical facility need to be isolated in order to guarantee safe isolation of the intended to-be-isolated part. That is, the system automatically detects potential conflicts and provides assistance to the operator to adjust the graphical selection in a way that the intended to-be-isolated part is fully covered by adding such parts which are affected by dependencies as defined in the isolation dependency rules.

In other words, the operator does not need any specific knowledge about the technical devices - neither about any technical dependencies nor about the location of the devices. It is sufficient to know that a service or maintenance activity is to be planned for a certain part of the facility which can be graphically selected on the respective floor plan. The system automatically assists the operator to not shut down equipment unintentionally where isolation conflicts may exist and further supports the operator to define a conflict free to-be-isolated part of the facility before sending the respective isolation signals to the isolation components.

In one embodiment, the computer system further includes an isolation scheduler component. The isolation scheduler can associate an isolation time point with each identified technical device. The sending of the corresponding isolation signal to the respective isolation component is then triggered at the isolation time point. In other words, the operator may input isolation time points as trigger points for isolation activities to be performed in the future. The isolation scheduler composes an isolation schedule for the identified technical devices based on the received isolation time points for the devices and executes the schedule by triggering the corresponding isolations signals at the scheduled isolation time points.

In one embodiment, the device identifier component may support multiple graphical selections for multiple to-be isolated parts of the technical facility. In this embodiment, the device identifier is configured to identify a first plurality of identified technical devices related to a first graphical selection and a second plurality of identified technical devices related to a second graphical selection. Each graphical selection corresponds to a different to-be-isolated part of the technical facility. The isolation scheduler component can then associate a first set of isolation time points with the first plurality and a second set of isolation time points with the second plurality, and trigger the sending of the isolation signals to the isolation components of the first plurality independently from the sending of the isolation signals to the isolation components of the second plurality. In other words, the isolation scheduler can manage multiple isolation schedules in parallel. The execution of the schedules can be planned in parallel or overlapping or non-overlapping. In other words, the scheduler can trigger the isolation signals to operate the isolation components in parallel or sequentially, so that some of the components are operated simultaneously (or overlapping). It can be an advantage to make sure that no potential isolation conflicts exist between the multiple to-be-isolated parts of the facility before executing the respective isolation schedules.

Other embodiments of the invention include a method executed by the computer system to perform the above described behavior and a computer program product which can be loaded into a memory of the computer system and can be executed by a processor of the computer system to execute the method.

Further aspects of the invention will be realized and attained by means of the elements and combinations particularly depicted in the appended claims. It is to be understood that both, the foregoing general description and the following detailed description are exemplary and explanatory only and are not restrictive of the invention as described.
FIG. 1 is a simplified system architecture of a computer system for supporting isolation according to one embodiment of the invention;
FIG. 2 shows the display component of the computer system in one embodiment for handling potential isolation conflicts;
FIG. 3 is a simplified system architecture of a further embodiment of the computer system for supporting isolation including scheduling capabilities;
FIG. 4 is a flow chart for a computer implemented method according to one embodiment of the invention for supporting remote isolation;
FIG. 5 shows additional optional details of the flow chart according to one embodiment of the invention for supporting isolation conflict resolution; and
FIG. 6 shows additional optional details of the flow chart according to one embodiment of the invention for supporting isolation scheduling.

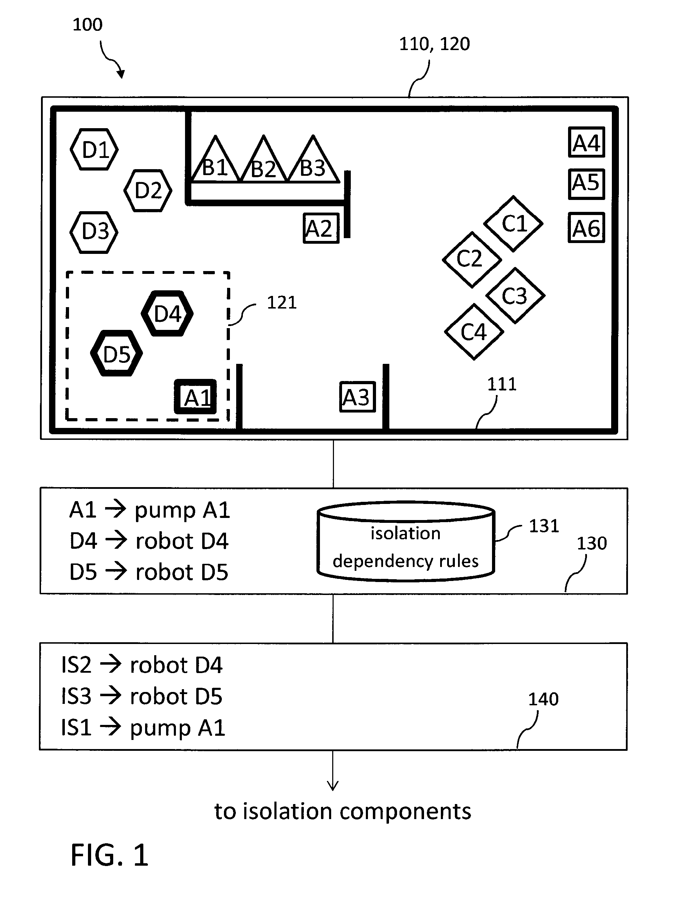

FIG. 1 is a simplified system architecture of a computer system 100 for supporting remote isolation of sections of a technical facility according to one embodiment of the invention.

Technical devices in the technical facility can be, for example, robots, motors, flow meters, conveyor belt, pump, etc. An asset management system may keep track of these installed technical devices of the technical facility as well as of its corresponding service jobs, that occurred in the past or that are planned in the future. The asset management system can have a remote connection to the technical devices via a control system. Before a service job is executed, it may be necessary to shutdown certain parts of the technical facility (i.e., to isolate them). This may be done by a service operator or a service supervisor. Based on the upcoming service jobs the operator knows which parts of the technical facility will be affected and he can utilize a floor plan of the technical facility on an operator workstation to indicate portions on the floor plan that correspond to to-be-isolated part of the plant area. As a result, devices such as robots, motors or conveyor belts, that are located in the to-be-isolated area or devices that have interdependencies with such devices should be brought to an energy state which does not cause hazard (e.g., a "zero-energy" state) prior to any physical work being carried out in the respective part of the facility. The asset management system is connected remotely to the technical devices and the shutdown procedures can be executed in a remote manner. Optionally, the technical devices that are in 'isolation mode' can be marked physically, e.g., a red light is shown on the device. Only if the 'isolation mode' is active, the service job list should be handed over to the service engineers who may then carry out the work on site. After the service jobs have been finished, the 'isolation mode' can be withdrawn and the devices can be restarted. In the following, a computer system is described which is configured to handle such a scenario. The computer system includes the workstation of the operator. Some of the described background functions may also be executed by the asset management system which is communicatively coupled with the operator work station and can provide functions which can be reused by multiple operator stations.

The computer system has a display component 110 configured to visualize a floor plan 111 of the technical facility. The display component can include commercially available visual output devices, such as LCD displays used for monitors, tablet PCs, mobile phones, etc. Further, the display component can include processor hardware and memory modules supporting graphics computations. The floor plan 111 in the example shows a spatial distribution of technical devices or technical equipment in the plant. A technical operator of the technical facility may use the computer system 100 as a command and control system for controlling the facility. One technical task in controlling the facility is the isolation of technical devices in specific sections of the facility. For example, in case of maintenance work in a specific section of a plant it may be necessary to electrically isolate the technical equipment in this section to guarantee the safety of the maintenance personnel and/or to avoid any damages to technical devices due to unintended operations of the devices.

The operator may have knowledge of maintenance work to be executed in the plant section corresponding to the lower left section of the floor plan 111. The computer system 100 further has an input component 120 which can receive a graphical selection 121 of a portion of the floor plan (for example, from the operator). In one embodiment, the input component and the display component can be implemented by commercially available touch screens. In this embodiment, the operator can touch the touch screen and indicate the respective section of the facility on the floor plan by performing a corresponding gesture. For example, the operator can draw a free hand drawing to perform the graphical selection 121. Other gestures may be used to create graphical selections with geometric shapes, such as squares, rectangles, circles, etc. Other types of input components, such as mouse devices or track balls, may be also used to input a graphical selection. The graphical selection 121 encloses a portion of the floor plan which corresponds to a to-be-isolated part (section) of the technical facility. The graphical selection can be visualized. For example, the boundaries of the graphical selection can be shown with colored lines or the area inside the boundaries can be shaded or covered by a semitransparent layer. Any other appropriate highlighting technique can be applied. At this time the operator does not need to care about the technical devices which are located in the to-be-isolated part. It is sufficient for the operator to know which part of the facility will be affected by an activity requiring isolation of the respective technical devices and to select this part with the graphical selection 121.

The computer system 100 further has a device identifier component 130. The device identifier 130 can identify technical devices A1, D4, D5 in the to-be-isolated part of the facility. The devices in the to-be isolated part may have graphical device representations (e.g.; A1 □ square; D4, D5 □ hexagon) in the floor plan inside enclosed by the graphical selection 121.

In the example, the technical devices D4, D5 are robots in a production line of the facility and the technical device A1 is a hydraulic or pneumatic pump which is needed to operate the robots D4, D5. Once the operator has defined the graphical selection 121 the device identifier 130 identifies the robots D4, D5 and the pump A1 as technical devices which are affected by an isolation of the respective part of the technical facility. In one embodiment, the device identifier can use any kind of mapping structure where a mapping for each technical device to a corresponding part of the facility is stored. For example, various parts of the facility can be associated with identification numbers or names and the mapping structure may assign each technical device to a respective identification number or name of the part where the technical device is located. In one embodiment, the device identifier can use location coordinates of the technical devices (e.g., stored in a technical device database connected to the mentioned asset management system) and identify those devices which have location coordinates falling into the part of the facility which corresponds to the graphical selection in the floor plan. In one embodiment, each graphical device representation may have associated metadata referencing the respective physical devices. Any other appropriate identification method may be used. The display component 110 can give visual feedback to the operator concerning the identified technical devices in response to the operator's graphical selection. For example, at least one visualization property of the graphical device representations enclosed by the graphical selection 121 can be changed to indicate the enclosed graphical device representations representing the technical devices A1, D4, D5 in the to-be-isolated part of the technical facility. Any appropriate visualization property, such as, for example, line style, color animation mode, etc. can be used. The operator is thereby supported in identifying critical technical devices in the to-be-isolated part which shall be subject to isolation. Again, the operator does not need to know anything about the technical characteristics or constraints of those technical devices. The operator is only interested in a local isolation of a certain part or section of the respective plant.

The computer system 100 further has an interface component 140 which is used for remote isolation of the identified devices (robots D4, D5, pump A1). The interface 140 can send isolation signals IS1, IS2, IS3 to isolation components of the identified technical devices A1, D4, D5. The isolation signals are adapted to operate the isolation components in a manner that they are isolated remotely. The isolation components can be in integrated parts of the respective technical devices A1, D4, D5 (e.g., integrated main switches). The isolation components can also be located remotely from the associated technical devices (e.g., outside the to-be-isolated part). For example, an electrical switch board B1 may include the isolation components for the pumps A1 to A6; another electrical switch board B2 may include the isolation components for the robots D1 to D5; another electrical switch board B3 may include the isolation components for the conveyors C1 to C4. In the example, based on the graphical selection 121 and the identified robots D4, D5 and pump A1, the interface 140 is sending the corresponding isolation signals IS2, IS3, IS1 to shut down the affected device in the to-be-isolated part.

Sometimes technical devices in a plant may have dependencies. For example, in case the robots D4, D5 need pressure provided by the hydraulic pump A1 for correct operation it may be advantageous to isolate or shut down the robots first and the pump later. When shutting down the pump first the robots may perform uncontrolled activities without the correct operating pressure which may finally lead to damaging the technical equipment or work products. Such dependencies can be stored as a set of isolation dependency rules 131. In general, isolation dependency rules are rules reflecting logical or physical dependencies between technical devices in the plant which may have an impact on the timing of the isolation signals. In other words, the sequence and the time intervals between the isolation signals IS1 to IS3 may depend on the dependencies between the identified technical devices A1, D4, D5 as reflected by the respective isolation dependency rules 131. The isolation dependency rules may be stored in a database, a table, an XML file or any other appropriate format. The isolation dependency rules 131 can be stored as an integral part of the computer system 100 as shown in FIG. 1 or they may be stored on any remote storage device which is communicatively coupled with the computer system 100. The device identifier 130 can then retrieve the isolation dependency rules 131 for the identified technical devices A1, D4, D5 and send the isolation signals in an order which takes the isolation dependencies for the identified technical devices into account. In the above example, the isolation signals IS2, IS3 for the robots D4, D5 can be sent out first to shut down the robots. The isolation signal IS1 for the hydraulic pump may be sent only after the robots had been completely isolated (shut down).

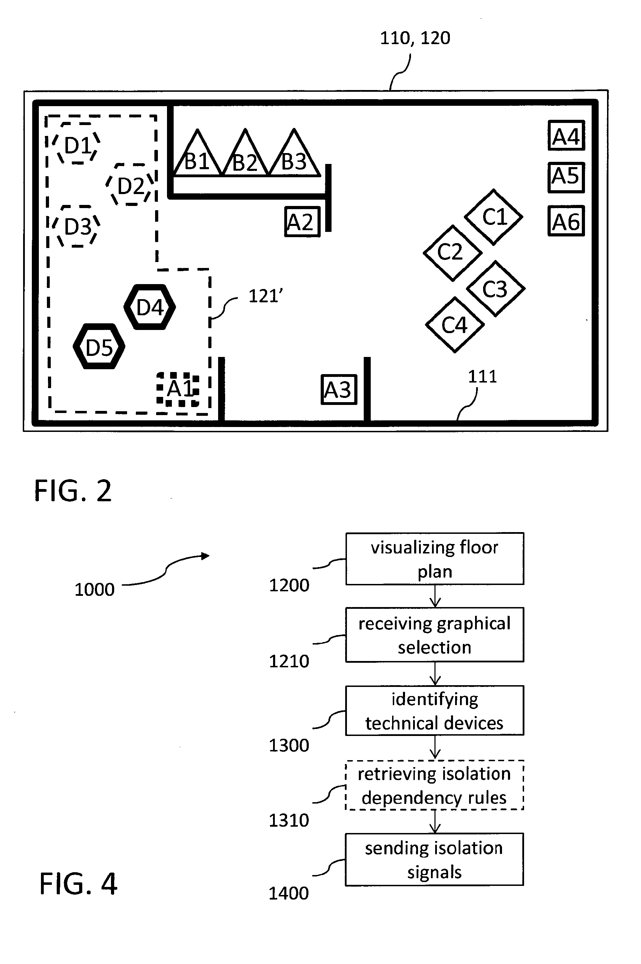

FIG. 2 shows the display component 110 of the computer system in one embodiment for handling potential isolation conflicts. In this embodiment, the computer system can retrieve the isolation dependency rules as described above and, further, based on the isolation dependency rules, detect a potential isolation conflict for at least one of the identified technical devices A1. A potential isolation conflict corresponds to a situation where at least one isolation dependency rule affects at least one of the identified technical devices in the to-be-isolated part of the facility and at least one further technical device outside the to-be-isolated part. In other words, a potential isolation conflict exists if the isolation of the to-be-isolated part can affect at least one further technical device outside the to-be-isolated part. In the example of FIG. 2, the hydraulic pump A1 is also connected with the robots D1 to D3 with graphic device representations in the upper left portion of the floor plan 111. As the isolation of the pump A1 may cause damage to the robots D1 to D3 because of uncontrolled operation in case of low pressure the robots D1 to D3 should be isolated before the pump A1. The respective isolation dependency rules describing the dependencies between the pump A1 and the robots D1 to D3 are retrieved by the device identifier. The device identifier then recognizes that some isolation dependency rules affect one of the identified devices (pump A1) and other technical devices, which are not located in the to-be-isolated part corresponding to the original graphical selection of the operator.

The display component can highlight the graphical representation of the at least one identified pump A1 which has a potential isolation conflict with the robots D1 to D3. Any appropriate visual indicator can be used for highlighting. In the example, the graphical device representation of A1 is shown with a dotted line. The operator is therefore alerted by the computer system. Without a need for technical understanding of the device dependencies in terms of isolation rules the operator gets notified by the system about the potential conflicts. The computer system may now suppress sending the isolation signals to the isolation components of the identified technical devices having a potential isolation conflict. It may also suppress the sending of isolation signals to identified technical devices which have isolation dependencies with the identified technical devices having a potential isolation conflicts. It may also suppress the sending of any isolation signals as long as a potential conflict is detected and not resolved.

The display component may further highlight the graphical device representations of the robots D1 to D3 (outside the original graphical selection on the floor plan) having a potential isolation conflict with the identified hydraulic pump A1. In the example, the highlighting is achieved by changing the visualization property line-style from "solid" to "dashed". Now the operator is not only aware of the identified pump having a potential conflict but can also see all the affected technical devices (robots D1 to D3) which are located outside the original to-be-isolated part of the facility. Based on the knowledge obtained from the isolation dependency rules the computer system can now suggest an extended graphical selection 121' to the operator. The extended graphical selection 121' encloses the graphical device representations of robots D1, D2, D3. In one embodiment, the computer system can calculate the extended graphical selection 121' to minimize the affected plant sections to what is absolutely necessary for guaranteeing safe isolation of all technical devices affected by the original graphical selection.

Thus, the computer system provides support for identifying all technical devices for isolation which are affected by the original isolation request of an operator not needing technical knowledge. Therefore, the system can improve safety conditions for the plant personnel (e.g., service engineers) and prevent damages to the equipment, wherein safety hazards and damages might be caused by malfunctioning of technical devices because of isolation conflicts with originally not identified technical devices.

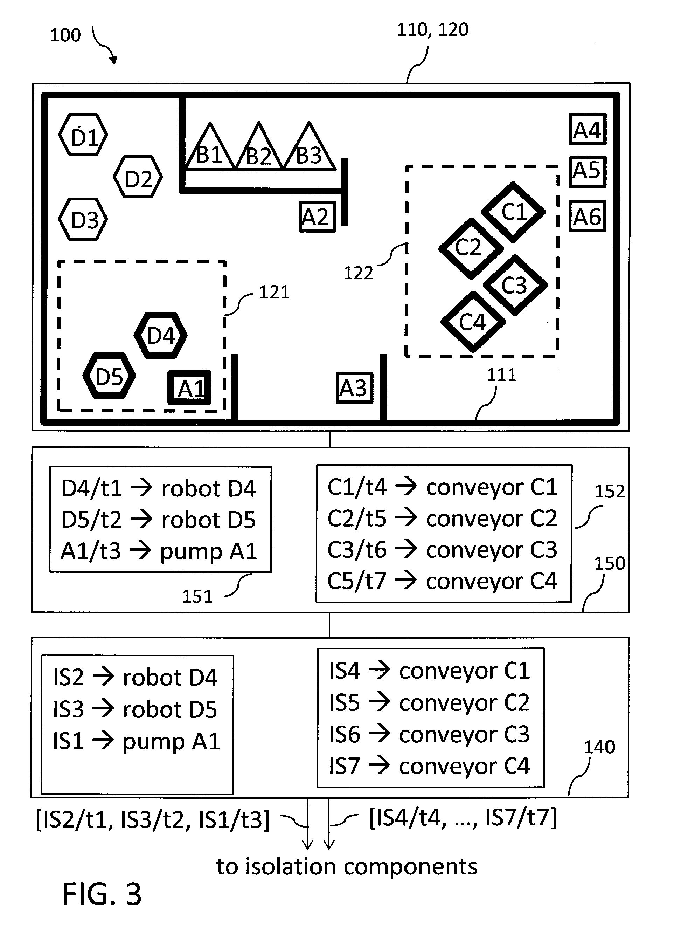

FIG. 3 is a simplified system architecture of a further embodiment of the computer system 100 for supporting isolation including scheduling capabilities. In this embodiment, the computer system further includes an isolation scheduler 150 component. The isolation scheduler component can associate an isolation time point with each identified technical device, and can then trigger the sending of the isolation signal to the respective isolation component at the isolation time point. The operator may input an isolation time point for each identified technical device. In case isolation dependencies, the isolation scheduler can support the operator in defining a schedule taking into account such dependencies. In the example of FIG. 3 the robots D1 to D3 are now supplied with compressed air by the pump A2. Therefore, no potential isolation conflicts exist for the technical devices identified based on the graphical selection 121. The planned isolation time points for the identified technical devices corresponding to the graphical selection 121 can be grouped in an isolation schedule 151. The isolation scheduler may receive a target start time for sending the isolation signals in relation to the identified robots D4, D5 and the pump A1. Because of the isolation dependency rules the isolation scheduler 150 knows that the pump A1 needs to be isolated after the robots D4, D5. Therefore, the received start time may be used by the isolation scheduler as the planned isolation time point t1 (or t2) triggering the sending of the isolation signals for the robots D4 (or D5). As the robots do not have isolation dependencies, the respective isolation signals IS2, IS3 can be triggered substantially simultaneously. That is, t1 can be smaller, equal, or greater than t2. However, the planned isolation time point t3 for triggering the isolation signal IS1 to the pump A1 needs to occur at a later time. That is, t3 needs to be greater than t1 and greater than t2. The isolation scheduler may use a predefined delay for calculating t3. The delays may also be received from the operator (manual inputs) or may be determined dynamically taking into account the isolation time interval which is needed to isolate the robots D4 and D5. In other words, the isolation schedule can be generated automatically by the isolation scheduler by using predefined delay times or by calculating isolation dependency specific delay times. Isolation dependency specific delay times can depend on the isolation time interval for a specific technical device (time to completely shut down the respective device). When the isolation schedule is executed, the interface component 140 sends the respective isolation signals to the respective isolator components at the scheduled isolation time points [IS2/t1, IS3/t2, IS1/t3].

In one embodiment, the input component 120 may allow to receive multiple graphical selections. In the example, besides the previously described first graphical selection 121, a second graphical selection 122 is made by the operator. For example, the operator may intend to define multiple isolation schedules 151, 152 for various parts of the plant for performing future plant maintenance activities. The device identifier component can then identify a first plurality of identified technical devices (e.g., pump A1, robots D4, D5) related to the first graphical selection 121 and a second plurality of identified technical devices (e.g., conveyors C1, C2, C3, C4) related to the second graphical selection 122. As described earlier, the isolation scheduler 150 can associate the first set of isolation time points t1, t2, t3 with the first plurality D4, D5, A1, respectively, and a second set of isolation time points t4, t5, t6, t7 with the second plurality C1, C2, C3, C4. As a result, the two isolation schedules 151, 152 may be created by the isolation scheduler. The operator may input start times for each of the schedules separately or define a sequence of isolation schedules to be executed sequentially, in parallel or overlapping. That is, it is also possible to execute multiple isolation schedules in parallel if no potential isolation conflicts exist. The operator may also manually overwrite isolation time points suggested by the isolation scheduler 150. However, the isolation scheduler may prevent such overwriting in case of potential isolation conflicts would be caused by the overwriting. The isolation scheduler can then trigger the sending [IS2/t1, IS3/t2, IS1/t3] of the isolation signals to the isolation components of the first plurality (robots D4, D5, pump A1) independently from the sending [IS4/t4, ..., IS7/t7] of the isolation signals to the isolation components of the second plurality (conveyors C1 to C4).

FIG. 4 is a flow chart for a computer implemented method 1000 according to one embodiment of the invention for supporting remote isolation of technical devices in a technical facility. The method steps can be executed by components of the computer system as described earlier. The method includes visualizing 1200 a floor plan of the technical facility; receiving 1210 at least one graphical selection wherein the graphical selection encloses a portion of the floor plan, the portion corresponding to a to-be-isolated part of the technical facility; identifying 1300 a plurality of technical devices in the to-be-isolated part; and sending 1400 isolation signals to isolation components of the identified technical devices wherein the isolation signals are adapted to operate the isolation components. Optionally, in case of isolation dependencies between the identified technical devices, the method can further include retrieving 1310 isolation dependency rules for the identified technical devices. This allows sending the isolation signals in an order which takes into account logical or physical interdependencies of the technical devices in terms of a preferred isolation sequence for the identified technical devices. For example, an isolation dependency rule can describe that a first technical device needs an input from a second technical device for safe and correct operation. In this case the sending 1400 step can take this into account and ensure that the isolation signal in relation to the first technical device is sent before the isolation signal in relation to the second technical device.

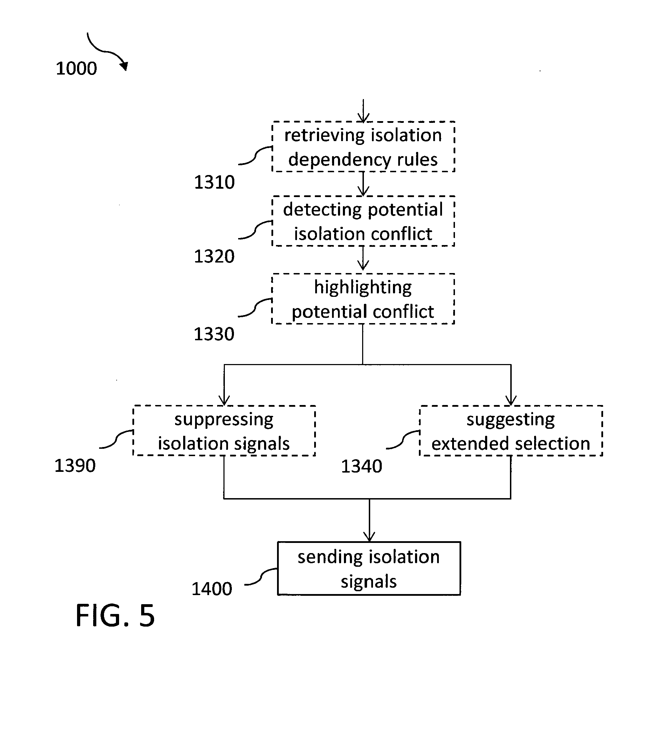

FIG. 5 shows additional but optional details of the flow chart of FIG. 4 according to one embodiment of invention for supporting isolation conflict resolution. The optional retrieving 1310 and sending 1400 steps corresponds to the respective steps in FIG. 4. The method 1000 can further include detecting 1320 a potential isolation conflict for at least one of the identified technical devices wherein the detecting 1320 is based on the retrieved isolation dependency rules. This embodiment can also be used in cases where technical devices located outside the to-be-isolated part of the facility may have impact on or may be impacted by an isolation of the identified technical devices according to the original graphical selection. In other words, the "outside device" may impact the "inside device", in the sense that the outside device can damage or destroy the inside device or cause hazard to the service engineer at the inside device. The impact direction can be reversed, so that an inside device can damage the outside device. The method can further include highlighting 1330 a graphical device representation of the at least one identified technical device having a potential isolation conflict to support the operator in quickly recognizing a potentially hazardous future situation. To let the operator quickly conceive the full scope of such a potentially hazardous future situation it can be advantageous to further support the operator with also highlighting such further graphical device representations corresponding to such technical devices having a potential isolation conflict with at least one (highlighted) identified technical device. The further graphical device representations can be on the floor plan outside the original graphical selection.

For improving safety of personnel and avoiding damages to technical equipment, the method 1000 may further include suppressing 1390 the sending of isolation signals to isolation components of the identified technical devices having a potential isolation conflict. In other words, in this embodiment the computer system prevents the operator from isolation of plant sections which would incur health (safety) or damage risks because of the operator's lack of technical knowledge regarding the technical equipment in the plant. By suggesting 1340 to the operator an extended graphical selection enclosing the further graphical representation(s) of the further technical device(s) outside the original graphical selection the method is guiding the operator through the process of conflict resolution taking into account the technical constraints of the plant environment which the operator may not know.

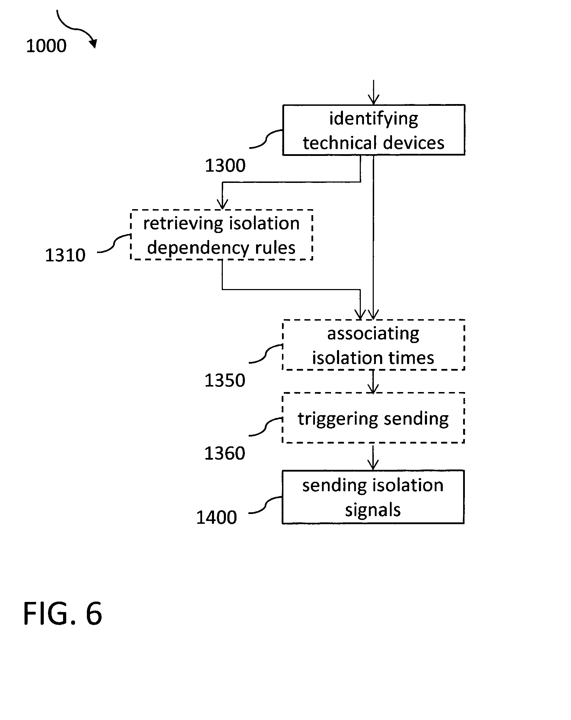

FIG. 6 shows additional optional details of the flow chart according to one embodiment of the invention for supporting isolation scheduling. Again, method steps with like reference numbers correspond to like steps of the flow chart in FIG. 4.

After the technical devices being subject to future isolation have been identified 1300, the method 1000 can further include associating 1350 an isolation time point with each identified technical device. For example, the operator may manually input the isolation time points in a respective isolation schedule. The system can support the operator by taking into account the retrieved 1310 isolation dependency rules for preventing the operator from generating a schedule which may be harmful for the technical equipment. In other words, the system can prevent the operator from inputting isolations times for the various identified technical devices in an order which may cause malfunctioning of the identified technical devices when executing the isolation schedule. After the creation of the isolation schedule in the associating 1350 step, the computer system can execute the isolation schedule. For execution the method 1000 further can include triggering 1360 the sending of the isolation signals to the respective isolation components at the respective isolation time point. As a result, the identified technical devices are shut down (isolated) in the order as reflected by the sequence of isolation signals based on the associated isolation time points.

The method 1000 can also handle scenarios including multiple isolation schedules which may be executed sequentially, in parallel or overlapping. For example, the operator may create multiple graphical selections on the floor plan, where each graphical selection includes respective graphical device representations. It is assumed in this example, that no potential isolation conflicts are present in the graphical selections. However, a person skilled in the art can easily apply the previous teaching about conflict resolution to the multiple graphical selection scenarios. The method 1000 can include identifying a first plurality of identified technical devices related to the first graphical selection and a second plurality of identified technical devices related to the second graphical selection. Then, for each plurality of identified technical devices a corresponding isolation schedule can be created. This includes associating a first set of isolation time points with the first plurality and a second set of isolation time points with the second plurality. Then, the created isolation schedules can be executed by triggering the sending of the isolation signals to the isolation components of the first plurality independently.

Method steps of the invention can be performed by one or more programmable processors executing a computer program to perform functions of the invention by operating on input data and generating output. Method steps can also be performed by, and apparatus of the invention can be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computing device. Generally, a processor will receive instructions and data from a read-only memory or a random access memory or both. The essential elements of a computer are at least one processor for executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. Such storage devices may also provisioned on demand and be accessible through the Internet (Cloud Computing). Information carriers suitable for embodying computer program instructions and data include all forms of non-volatile memory, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in special purpose logic circuitry.

To provide for interaction with a user, the invention can be implemented on a computer having a display device, e.g., a cathode ray tube (CRT) or liquid crystal display (LCD) monitor, for displaying information to the user and an input device such as a keyboard, touchscreen or touchpad, a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

The invention can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the invention, or any combination of such back-end, middleware, or front-end components. Client computers can also be mobile devices, such as smartphones, tablet PCs or any other handheld computing device. The components of the system can be interconnected by any form or medium of digital data communication, e.g., a communication network. Examples of communication networks include a local area network (LAN) and a wide area network (WAN), e.g., the Internet or wireless LAN or telecommunication networks.

The computing system can include clients and servers. A client and server are generally remote from each other and typically interact through a communication network. The relationship of client and server arises by virtue of computer programs running on the respective computers and having a client-server relationship to each other.

The present invention also comprises any combination of preferred embodiments as well as individual features and developments provided they do not exclude each other.

## Claims

1. A computer system (100) supporting isolation of technical devices in a technical facility, comprising:
a display component (110) configured to visualize a floor plan (111) of the technical facility;
an input component (120) configured to receive at least one graphical selection (121) wherein the graphical selection (121) encloses a portion of the floor plan, the portion corresponding to a to-be-isolated part of the technical facility;
a device identifier component (130) configured to identify a plurality of technical devices (A1, D4, D5) located in the to-be-isolated part; and
an interface component (140) configured to send isolation signals (IS1, IS2, IS3) to isolation components of the identified technical devices (A1, D4, D5) wherein the isolation signals are adapted to operate the isolation components.

2. The computer system of claim 1, wherein the display component (110) is configured to change, in response to receiving the at least one graphical selection (121), at least one visualization property of graphical device representations enclosed by the at least one graphical selection, the enclosed graphical device representations representing technical devices (A1, D4, D5) in the to-be-isolated part of the technical facility.

3. The computer system of claim 1 or 2, wherein the device identifier component is further configured:
to retrieve isolation dependency rules (131) for the identified technical devices (A1, D4, D5), and
based on the isolation dependency rules (131), to detect a potential isolation conflict for at least one of the identified technical devices (A1).

4. The computer system of claim 3, wherein the display component is further configured to highlight a graphical device representation of the at least one identified technical device (A1) having a potential isolation conflict.

5. The computer system of claim 4, wherein the display component is further configured to highlight at least one further graphical device representation of at least one further technical device (D1, D2, D3) having a potential isolation conflict with the at least one of the identified technical devices (A1) wherein the at least one further graphical device representation is on the floor plan outside the at least one graphical selection (121).

6. The computer system of any one of the previous claims, further comprising:
an isolation scheduler (150) component configured to associate an isolation time point with each identified technical device, and to trigger the sending of the isolation signal to the respective isolation component at the isolation time point.

7. The computer system of claim 6, wherein:
the device identifier component is configured to identify a first plurality (A1, D4, D5) of identified technical devices related to a first graphical selection (121) and a second plurality (C1, C2, C3, C4) of identified technical devices related to a second graphical selection (122); and
the isolation scheduler component (150) is further configured to associate a first set of isolation time points (t1, t2, t3) with the first plurality (A1, D4, D5) and a second set of isolation time points (t4, t5, t6, t7) with the second plurality (C1, C2, C3, C4), and
to trigger the sending ([IS2/t1, IS3/t2, IS1/t3]) of the isolation signals to the isolation components of the first plurality independently from the sending ([IS4/t4, ..., IS7/t7]) of the isolation signals to the isolation components of the second plurality.

8. A computer implemented method (1000) for supporting isolation of technical devices in a technical facility, comprising:
visualizing (1100) a floor plan (111) of the technical facility;
receiving (1200) at least one graphical selection (121) wherein the graphical selection (121) encloses a portion of the floor plan, the portion corresponding to a to-be-isolated part of the technical facility;
identifying (1300) a plurality of technical devices (A1, D4, D5) in the to-be-isolated part; and
sending (1400) isolation signals (IS1, IS2, IS3) to isolation components of the identified technical devices (A1, D4, D5) wherein the isolation signals are adapted to operate the isolation components.

9. The computer implemented method of claim 8, further comprising:
retrieving (1310) isolation dependency rules (131) for the identified technical devices (A1, D4, D5);
based on the isolation dependency rules (131), detecting (1320) a potential isolation conflict for at least one of the identified technical devices (A1); and
highlighting (1330) a graphical device representation of the at least one identified technical device (A1) having a potential isolation conflict.

10. The computer implemented method of claim 8 or 9, further comprising:
highlighting at least one further graphical device representation of at least one further technical device (D1, D2, D3) having a potential isolation conflict with the at least one of the identified technical devices (A1) wherein the at least one further graphical device representation is on the floor plan outside the at least one graphical selection (121).

11. The computer implemented method of the claims 9 or 10, wherein the sending of isolation signals to isolation components of the identified technical devices having a potential isolation conflict is suppressed (1390).

12. The computer implemented method of the claim 10, further comprising:
suggesting (1340) an extended graphical selection (121') enclosing the at least one further graphical device representation of the at least one further technical device (D1, D2, D3).

13. The computer implemented method of any one of the claims 8 to 12, further comprising:
associating (1350) an isolation time point with each identified technical device; and
triggering (1360) the sending of the isolation signal to the respective isolation component at the isolation time point.

14. The computer implemented method of claim 13, further comprising:
identifying a first plurality of identified technical devices related to a first graphical selection and a second plurality of identified technical devices related to a second graphical selection;
associating a first set of isolation time points with the first plurality and a second set of isolation time points with the second plurality; and
triggering the sending of the isolation signals to the isolation components of the first plurality independently from the sending of the isolation signals to the isolation components of the second plurality.

15. A computer program product that when loaded into the memory of a computing device and executed by a processor of the computing device executes the steps of the computer implemented method according to of any one of the claims 8 to 14.
